# EUROPEAN PATENT APPLICATION

(11) **EP 4 400 478 A1**
(43) Date of publication of application: **17.07.2024**
(21) Application number: 22864218.7
(22) Date of filing: 10.08.2022
(51) Int. Cl.: C01B 32/336, B01J 20/20, B01J 20/28, B01J 20/30, C02F 1/28, D01F 9/15

(54) **ACTIVATED CARBON**

(30) Priority: 06.09.2021 JP 2021144910
(71) Applicant: Ad'All Co., Ltd., Uji-shi, Kyoto 611-8555 (JP); Unitika Ltd., Osaka-shi, Osaka 541-8566 (JP); Osaka Gas Chemicals Co., Ltd., Osaka-shi, Osaka 550-0023 (JP)
(72) Inventor: SUGAHARA, Kazuomi, Uji-shi, Kyoto 611-8555 (JP); NAKANO, Tomoyasu, Uji-shi, Kyoto 611-8555 (JP); SHIMIZU, Hirokazu, Uji-shi, Kyoto 611-8555 (JP); SAKAI, Keiji, Osaka-shi, Osaka 550-0023 (JP); ASADA, Takuya, Osaka-shi, Osaka 550-0023 (JP)
(74) Representative: Müller-Boré & Partner Patentanwälte PartG mbB
(86) International application number: PCT/JP2022/030637
(87) International publication number: WO 2023/032633

(57) **Abstract**

It is an object of the present invention to provide an activated carbon having a high mechanical strength and an excellent filtration capacity for trihalomethanes. An activate carbon in which a pore volume A of pores with a size of 1.0 nm or less, of pore volumes calculated by the QSDFT method from a nitrogen desorption isotherm, is 0.23 cc/g or more and 0.25 cc/g or less, a pore volume B of pores with a size of 1.5 nm or more and 2.5 nm or less, of pore volumes calculated by the QSDFT method from the nitrogen desorption isotherm, is more than 0.12 cc/g and 0.19 cc/g or less, and the activated carbon has a specific surface area of 1000 m²/g or more and 1200 m²/g or less.

## Description

### Technical Field

The present invention relates to an activated carbon having a high mechanical strength and an excellent filtration capacity for trihalomethanes.

### Background Art

Conventionally, tap water and the like for drinking purposes contain chlorine added for disinfection. However, chlorine contained in tap water reacts with organic substances contained in the tap water to produce organic halogen compounds. For example, it is known that humic substances, which are natural organic substances, produce carcinogenic trihalomethanes, such as chloroform, upon reaction with chlorine in tap water. Thus, activated carbons have been recently proposed which have an excellent filtration capacity for trihalomethanes contained in tap water.

Patent Literature 1, for example, has reported an activated carbon having an excellent filtration capacity for trihalomethane, in which a pore volume of pores with a size of 1.0 nm or less, of pore volumes calculated by the QSDFT method, is 0.3 cc/g or more, and a pore volume of pores with a size of 3.0 nm or more and 3.5 nm or less, of pore volumes calculated by the QSDFT method, is 0.009 cc/g or more. The activated carbon disclosed in Patent Literature 1 can exhibit an excellent filtration capacity for trihalomethane, even in water treatment by passing water at a high superficial velocity (SV), and thus, is highly useful.

### Citation List

### Patent Literature

Patent Literature 1: WO 2019/244903

### Summary of Invention

### Technical Problem

The present inventors have continued research to further improve the functionality of an activated carbon, and found that the activated carbon disclosed in Patent Literature 1 leaves room for further improvement in terms of mechanical strength.

It is therefore a main object of the present invention to provide an activated carbon having a high mechanical strength and an excellent filtration capacity for trihalomethanes.

### Solution to Problem

The present inventors assumed that it would be necessary to reduce the pore volume A of pores with a size of 1.0 nm or less, in order to further improve the mechanical strength of the activated carbon disclosed in Patent Literature 1. More specifically, the present inventors assumed that an obstacle to further improving the mechanical strength of the activated carbon disclosed in Patent Literature 1 was that the pore volume A of pores with a size of 1.0 nm or less was 0.3 cc/g or more. Unfortunately, trihalomethanes are believed to be easily adsorbed by pores with a pore size of 1.0 nm or less. Thus, simply reducing the pore volume A of pores with this size results in a decreased filtration capacity for trihalomethanes and cannot achieve a high mechanical strength and an excellent filtration capacity for trihalomethanes simultaneously.

Thus, the present inventors have conducted further research and found that, by controlling the pore size, pore volume, and specific surface area of an activated carbon, the activated carbon can achieve a high mechanical strength and an excellent filtration capacity for trihalomethanes simultaneously. Specifically, the present inventors have found that when an activated carbon satisfies the following: (1) a pore volume A of pores with a size of 1.0 nm or less, of pore volumes calculated by the QSDFT method from a nitrogen desorption isotherm, is 0.230 cc/g or more and 0.250 cc/g or less; (2) a pore volume B of pores with a size of 1.5 nm or more and 2.5 nm or less, of pore volumes calculated by the QSDFT method from the nitrogen desorption isotherm, is more than 0.12 cc/g and 0.19 cc/g or less; and (3) the activated carbon has a specific surface area of 1000 m²/g or more and 1200 m²/g or less, the activated carbon can have a high mechanical strength and an excellent filtration capacity for trihalomethanes. The present invention has been completed as a result of further research based on these findings.

In summary, the present invention provides the following aspects of the invention:
Item 1. An activate carbon in which a pore volume A of pores with a size of 1.0 nm or less, of pore volumes calculated by the QSDFT method from a nitrogen desorption isotherm, is 0.230 cc/g or more and 0.250 cc/g or less,
   a pore volume B of pores with a size of 1.5 nm or more and 2.5 nm or less, of pore volumes calculated by the QSDFT method from the nitrogen desorption isotherm, is more than 0.120 cc/g and 0.190 cc/g or less, and
   the activated carbon has a specific surface area of 1000 m²/g or more and 1200 m²/g or less.
Item 2. The activated carbon according to item 1, wherein the activated carbon is fibrous activated carbon.
Item 3. The activated carbon according to item 1 or 2, wherein the activated carbon has a filtration capacity for chloroform of 40 L/g or more in water treatment by passing water at a superficial velocity of 3000 h⁻¹ as set forth below:
   <Method of Measuring the Chloroform Filtration Capacity in Water Treatment by Passing Water at a Superficial Velocity of 3000 h⁻¹>
   3.0 g of the activated carbon after dried is beaten and then packed into a glass column (diameter: 25 mm) to prepare an activated carbon column (with an activated carbon packing height of 41 mm). Test raw water with a chloroform concentration of 60 ± 12 ppb is prepared, controlled to a water temperature of 20 ± 1°C, and passed through the activated carbon column at a superficial velocity of 3000 h⁻¹. Chloroform concentrations in the test raw water and filtrate are measured by the headspace method, using a non-radiation source-type electron capture detector. An amount of passed water (L/g) when a chloroform removal rate of 80% is reached is determined as the filtration capacity for chloroform.
Item 4. The activated carbon according to item 2, wherein the activated carbon has a tensile strength of 0.15 GPa or more as measured in accordance with "7.3.2 Tensile strength" in JIS K 1477: 2007 "Test methods for fibrous activated carbon".
Item 5. A method of producing the activated carbon according to any one of items 1 to 4, comprising the step of activating an activated carbon precursor comprising 0.1 to 1.0% by mass of yttrium at a temperature of 925 to 940°C in an atmosphere having a CO₂ concentration of 90% by volume or more.
Item 6. A water purification filter comprising the activated carbon according to any one of items 1 to 4.
Item 7. A method of filtering water, wherein the method is performed using the activated carbon according to any one of items 1 to 4.

### Advantageous Effects of Invention

The activated carbon of the present invention satisfies the predetermined ranges of the pore sizes, pore volumes, and specific surface area and thus, can have a high mechanical strength and an excellent filtration capacity for trihalomethanes. In particular, the activated carbon of the present invention can exhibit an excellent filtration capacity for trihalomethane even in water treatment by passing water at a high superficial velocity and thus, is suitable for use in applications such as removing trihalomethanes from tap water.

### Brief Description of Drawings

Fig. 1 is a graph showing a pore size distribution of an activated carbon of Example 1 calculated by the QSDFT method from a nitrogen desorption isotherm.
Fig. 2 is a graph showing a pore size distribution of an activated carbon of Example 2 calculated by the QSDFT method from a nitrogen desorption isotherm.
Fig. 3 is a graph showing a pore size distribution of an activated carbon of Example 3 calculated by the QSDFT method from a nitrogen desorption isotherm.
Fig. 4 is a graph showing a pore size distribution of an activated carbon of Comparative Example 1 calculated by the QSDFT method from a nitrogen desorption isotherm.
Fig. 5 is a graph showing a pore size distribution of an activated carbon of Comparative Example 2 calculated by the QSDFT method from a nitrogen desorption isotherm.
Fig. 6 is a graph showing a pore size distribution of an activated carbon of Comparative Example 3 calculated by the QSDFT method from a nitrogen desorption isotherm.

### Description of Embodiments

In an activate carbon of the present invention, a pore volume A of pores with a size of 1.0 nm or less, of pore volumes calculated by the QSDFT method from a nitrogen desorption isotherm, is 0.230 cc/g or more and 0.250 cc/g or less; a pore volume B of pores with a size of 1.5 nm or more and 2.5 nm or less, of pore volumes calculated by the QSDFT method from the nitrogen desorption isotherm, is more than 0.12 cc/g and 0.19 cc/g or less; and the activated carbon has a specific surface area of 1000 m²/g or more and 1200 m²/g or less. The activated carbon of the present invention will be hereinafter described in detail.

### [Pore Sizes and Pore Volumes]

In the present invention, the pore sizes and pore volumes of the activated carbon are values calculated by the QSDFT (Quenched Solid Density Functional Theory) method from a nitrogen desorption isotherm (relative pressure: 0.02 to 0.995) measured at a temperature of 77 K. The QSDFT method is an analytical technique for analyzing pore sizes of geometrically and chemically disordered microporous and mesoporous carbons. This technique can calculate pore size distributions from about 0.5 nm up to about 40 nm. The QSDFT method provides a significant improvement in the accuracy of pore size distribution analysis, by explicitly taking into account the effects of pore surface roughness and heterogeneity. In the present invention, for example, the "AUTOSORB-1-MP" gas adsorption measuring apparatus available from Quantachrome may be used to measure the nitrogen desorption isotherm. In the pore size distribution analysis by the QSDFT method, the calculation model, N₂ at 77 K on carbon [slit pore, QSDFT equilibrium model], may be applied.

In the activated carbon of the present invention, the pore volume A of pores with a size of 1.0 nm or less, of pore volumes calculated by the QSDFT method from a nitrogen desorption isotherm, is 0.230 cc/g or more and 0.250 cc/g or less. Setting the pore volume A to 0.250 cc/g or less can impart a high mechanical strength to the activated carbon. On the other hand, setting the pore volume A to 0.230 cc/g or more can impart an excellent filtration capacity for trihalomethanes, particularly an excellent filtration capacity for trihalomethanes even at a high superficial velocity, to the activated carbon. In view of facilitating achieving a high mechanical strength and an excellent filtration capacity for trihalomethanes simultaneously, the pore volume A is preferably 0.230 cc/g or more and 0.245 cc/g or less, more preferably 0.230 cc/g or more and 0.240 cc/g or less, and still more preferably 0.235 cc/g or more and 0.240 cc/g or less.

In the activated carbon of the present invention, the pore volume B of pores with a size of 1.5 nm or more and 2.5 nm or less, of pore volumes calculated by the QSDFT method from the nitrogen desorption isotherm, is more than 0.120 cc/g and 0.190 cc/g or less. Setting the pore volume B to more than 0.120 cc/g can impart an excellent filtration capacity for trihalomethanes, particularly an excellent filtration capacity for trihalomethanes even at a high superficial velocity, to the activated carbon. On the other hand, setting the pore volume B to 0.19 cc/g or less can facilitate satisfying the pore volume A in the range of 0.230 cc/g or more. According to the findings of the present inventors, it is believed that the pores with a size of 1.5 nm or more and 2.5 nm or less adsorb trihalomethanes more easily than pores with a size of 3.0 nm or more and 3.5 nm or less while having the function to allow trihalomethanes to diffuse therein. It is believed that for this reason, the activated carbon of the present invention can exhibit excellent trihalomethane adsorption performance even though the pore volume A of pores with a size of 1.0 nm or less, which are responsible for trihalomethane adsorption performance, is reduced to 0.250 cc/g or less.

In view of imparting an excellent filtration capacity for trihalomethanes, particularly an excellent filtration capacity for trihalomethanes even at a high superficial velocity, to the activated carbon, the pore volume B is preferably 0.121 cc/g or more and 0.180 cc/g or less, more preferably 0.145 cc/g or more and 0.175 cc/g or less, still more preferably 0.150 cc/g or more and 0.170 cc/g or less, and particularly preferably 0.153 cc/g or more and 0.169 cc/g or less.

In the activated carbon of the present invention, while a pore volume of pores with a size of 0.65 nm or less, of pore volumes calculated by the QSDFT method from the nitrogen desorption isotherm, is not limited as long as the above-defined ranges of pore volumes A and B are satisfied, the pore volume of pores with a size of 0.65 nm or less is, for example, 0.060 cc/g or more and 0.090 cc/g or less, preferably 0.060 cc/g or more and 0.077 cc/g or less, and more preferably 0.069/g or more and 0.077 cc/g or less. Satisfying these ranges facilitates more satisfactorily achieving a high mechanical strength and an excellent filtration capacity for trihalomethanes simultaneously.

In the activated carbon of the present invention, while a pore volume of pores with a size of 0.8 nm or less, of pore volumes calculated by the QSDFT method from the nitrogen desorption isotherm, is not limited as long as the above-defined ranges of pore volumes A and B are satisfied, the pore volume of pores with a size of 0.8 nm or less is, for example, 0.140 cc/g or more and 0.150 cc/g or less, and preferably 0.144 cc/g or more and 0.150 cc/g or less. Satisfying these ranges facilitates more satisfactorily achieving a high mechanical strength and an excellent filtration capacity for trihalomethanes simultaneously.

In the activated carbon of the present invention, while a pore volume of pores with a size of 1.5 nm or less, of pore volumes calculated by the QSDFT method from the nitrogen desorption isotherm, is not limited as long as the above-defined ranges of pore volumes A and B are satisfied, the pore volume of pores with a size of 1.5 nm or less is, for example, 0.300 cc/g or more and 0.400 cc/g or less, and preferably 0.300 cc/g or more and 0.350 cc/g or less. Satisfying these ranges facilitates more satisfactorily achieving a high mechanical strength and an excellent filtration capacity for trihalomethanes simultaneously.

In the activated carbon of the present invention, while a pore volume of pores with a size of 2.0 nm or less, of pore volumes calculated by the QSDFT method from the nitrogen desorption isotherm, is not limited as long as the above-defined ranges of pore volumes A and B are satisfied, the pore volume of pores with a size of 2.0 nm or less is, for example, 0.350 cc/g or more and 0.450 cc/g or less, preferably 0.350 cc/g or more and 0.425 cc/g or less, and more preferably 0.380 cc/g or more and 0.425 cc/g or less. Satisfying these ranges facilitates more satisfactorily achieving a high mechanical strength and an excellent filtration capacity for trihalomethanes simultaneously.

In the activated carbon of the present invention, while a pore volume of pores with a size of 2.5 nm or more, of pore volumes calculated by the QSDFT method from the nitrogen desorption isotherm, is not limited as long as the above-defined ranges of pore volumes A and B are satisfied, the pore volume of pores with a size of 2.5 nm or more is, for example, 0.200 cc/g or less, preferably 0.030 cc/g or more and 0.180 cc/g or less, and still more preferably 0.055 cc/g or more and 0.160 cc/g or less.

In the activated carbon of the present invention, while a pore volume of pores with a size of 3.5 nm or more, of pore volumes calculated by the QSDFT method from the nitrogen desorption isotherm, is not limited as long as the above-defined ranges of pore volumes A and B are satisfied, the pore volume of pores with a size of 3.5 nm or more is, for example, 0.010 cc/g or less, and preferably 0.005 cc/g or less. Satisfying these ranges can further improve the filtration capacity for trihalomethanes.

In the activated carbon of the present invention, while a total pore volume calculated by the QSDFT method from the nitrogen desorption isotherm is not limited as long as the above-defined ranges of pore volumes A and B are satisfied, the total pore volume is, for example, 0.400 cc/g or more and 0.800 cc/g or less, preferably 0.450 cc/g or more and 0.700 cc/g or less, and more preferably 0.500 cc/g or more and 0.670 cc/g or less. Satisfying these ranges facilitates more satisfactorily achieving a high mechanical strength and an excellent filtration capacity for trihalomethanes simultaneously.

### [Specific Surface Area]

The activated carbon of the present invention has a specific surface area of 1000 m²/g or more and 1200 m²/g or less. Setting the specific surface area to 1000 m²/g or more can impart an excellent filtration capacity for trihalomethanes, particularly an excellent filtration capacity for trihalomethanes even at a high superficial velocity, to the activated carbon. On the other hand, setting the specific surface area to 1200 m²/g or less can facilitate satisfying the pore volume A in the range of 0.230 cc/g or more. In view of further improving the filtration capacity for trihalomethanes, particularly the filtration capacity for trihalomethanes at a high superficial velocity, the specific surface area of the activated carbon of the present invention is preferably 1000 m²/g or more and 1180 m²/g or less, more preferably 1050 m²/g or more and 1180 m²/g or less, and still more preferably 1080 m²/g or more and 1160 m²/g or less. As used herein, the specific surface area of the activated carbon is the value as determined by the BET method (a single-point method with the measurement point at a relative pressure of 0.1) using nitrogen as the adsorbate.

### [Raw Material from Which the Activated Carbon of the Present Invention is Produced]

Examples of the raw material from which the activated carbon of the present invention is produced (the main raw material of an activated carbon precursor) include, but are not limited to, plant-based carbonaceous precursors (for example, plant-derived materials such as bamboo, wood, sawdust, charcoal, coconut shells, walnut shells and other fruit shells, and fruit seeds), mineral-based carbonaceous precursors (for example, mineral-derived materials such as peat, lignite, brown coal, bituminous coal, anthracite, coke, and coal tar), infusibilized or carbonized organic materials, and infusible resins such as phenolic resins. Specific examples of the organic materials include polyacrylonitrile, pitch, polyvinyl alcohol, and cellulose. Of these raw materials, the activated carbon of the present invention is preferably produced from pitch, more preferably from coal pitch.

### [Metal Species Contained in the Activated Carbon of the Present Invention]

One embodiment of the activated carbon of the present invention contains yttrium. As described below, a preferred method for producing the activated carbon of the present invention comprises the step of activating an activated carbon precursor comprising an yttrium compound, such that the activated carbon obtained by the method contains yttrium from the yttrium compound in the activated carbon precursor. The yttrium contained in one embodiment of the activated carbon of the present invention may be in the form of yttrium alone, in the form of an yttrium compound, or in the form of a mixture thereof. In one embodiment of the activated carbon of the present invention, the yttrium content is, for example, 0.001 to 1.0% by mass, preferably 0.01 to 0.8% by mass, and more preferably 0.4 to 0.6% by mass. The yttrium content in the activated carbon is determined by measuring the elemental yttrium content using an energy dispersive X-ray fluorescence spectrometer. When the activated carbon of the present invention contains yttrium, the yttrium content may be reduced by washing. Reducing the yttrium content by washing does not affect the mechanical strength and filtration capacity for trihalomethanes of the activated carbon of the present invention.

One embodiment of the activated carbon of the present invention is substantially free of iron (iron alone and/or an iron compound). As used herein, the phrase "substantially free of iron" means that when the activated carbon is subjected to ashing treatment, and the ash is dissolved in an acid, the elemental iron content as measured using an ICP emission spectrometer is below the detection limit.

### [Form]

Examples of forms of the activated carbon of the present invention include, but are not limited to, a fibrous form, a granular form, and a powdered form. The activated carbon of the present invention is preferably fibrous activated carbon, in view of, for example, processability when processed for use as a filter, and the rate of trihalomethane adsorption when used as a water purifier.

When the activated carbon of the present invention is in a fibrous form, the activated carbon has an average fiber diameter of, for example, 30 µm or less, preferably about 5 to 20 µm, more preferably about 10 to 20 µm, still more preferably about 12 to 16 µm. As used herein, the average fiber diameter of the fibrous activated carbon is measured as follows: An image of a specimen of a single fiber of the fibrous activated carbon as viewed from the side is observed with an optical microscope, and the image is taken with a microscope camera system attached to the microscope. The image taken is imported into image analysis software to measure the width of the specimen at a given position in the length direction. This is repeated for 50 fibers of the fibrous activated carbon, and the average value of the widths of the 50 fibers is determined as the average fiber diameter.

When the activated carbon of the present invention is in a granular or powdered form, the activated carbon may have, for example, a particle diameter with a cumulative volume percentage D50 of 0.01 to 5 mm as measured by the laser diffraction/scattering method.

### [Filtration Capacity for Trihalomethanes]

The activated carbon of the present invention satisfies the predetermined ranges of the pore volumes A and B and the specific surface area as described above and thus, can have an excellent filtration capacity for trihalomethanes, particularly an excellent filtration capacity for trihalomethanes even at a high superficial velocity.

One example of the filtration capacity for trihalomethanes that the activated carbon of the present invention can have is a chloroform filtration capacity of 40 L/g or more, preferably 40 to 90 L/g, more preferably 40 to 60 L/g, still more preferably 42 to 45 L/g, in water treatment by passing water at a superficial velocity of 3000 h⁻¹ as set forth below:

### <Method of Measuring the Filtration Capacity for Chloroform in Water Treatment by Passing Water at a Superficial Velocity of 3000 h⁻¹>

3.0 g of the activated carbon after dried is beaten and then packed into a glass column (diameter: 25 mm) to prepare an activated carbon column (with an activated carbon packing height of 41 mm). Test raw water with a chloroform concentration of 60 ± 12 ppb is prepared, controlled to a water temperature of 20 ± 1°C, and passed through the activated carbon column at a superficial velocity of 3000 h⁻¹. Chloroform concentrations in the test raw water and filtrate are measured by the headspace method, using a non-radiation source-type electron capture detector. An amount of passed water (L/g) when a chloroform removal rate of 80% is reached is determined as the filtration capacity for chloroform. The chloroform removal rate (%) is calculated according to the equation shown below. The amount of passed water when a chloroform removal rate of 80% is reached refers to the total amount of the filtrate flowed through the activated carbon column and collected until the chloroform removal rate decreases to 80%. The method of measuring the filtration capacity for chloroform is as described in detail in the Examples section. Chloroform removal rate (%) = {(chloroform concentration in test raw water - chloroform concentration in filtered water) / (chloroform concentration in test raw water)} × 100

### [Mechanical Strength]

The activated carbon of the present invention satisfies the predetermined ranges of the pore volumes A and B and the specific surface area as described above and thus, can have a high mechanical strength.

One example of the mechanical strength that the activated carbon of the present invention can have when in the form of fibrous activated carbon is a tensile strength of 0.15 GPa or more, preferably 0.15 to 0.40 GPa, more preferably 0.16 to 0.25 GPa. As used herein, the tensile strength of the fibrous activated carbon is the value as measured in accordance with "7.3.2 Tensile strength" in the Japanese industrial standard JIS K 1477: 2007 "Test methods for fibrous activated carbon". Specific measurement conditions are as described in the Examples section.

### [Applications]

The activated carbon of the present invention is preferably used for water purification applications, although not limited thereto. In particular, because of its excellent filtration capacity for trihalomethanes, the activated carbon of the present invention is suitable for use as a water purification filter for removing trihalomethanes from a liquid that contains or may contain trihalomethanes.

When the activated carbon of the present invention is used as a water purification filter, it may be molded into a desired shape, as required. For example, when the activated carbon of the present invention is used as a water purification filter for a water purifier, it is preferably formed into a cylindrical shape, and may have a cap attached to a top portion of the cylindrical shape and/or may have a surface covered with a nonwoven fabric, as required. Alternatively, when the activated carbon of the present invention is used as a water purification filter, the activated carbon as is or molded in a desired shape may be loaded into a housing and provided as a cartridge.

The trihalomethane to be removed through the activated carbon of the present invention may be at least any one of chloroform, bromodichloromethane, dibromochloromethane, and bromoform, preferably chloroform.

The liquid to be treated with the activated carbon of the present invention may be any liquid that contains or may contain trihalomethanes, for example, tap water or industrial water, preferably tap water.

Because of its excellent filtration capacity for trihalomethanes even at a high superficial velocity, the activated carbon of the present invention is also suitable for use as a water purification filter in water treatment by passing water (filtration treatment) at a high superficial velocity. Of course, the activated carbon of the present invention can be used not only as a water purification filter in water treatment by passing water at a high superficial velocity, but also as a water purification filter in water treatment by passing water at a low superficial velocity. The superficial velocity to be applied to the activated carbon of the present invention during water treatment by passing water is, for example, 500 h⁻¹ or more, and preferably 1000 to 4000 h⁻¹. When the activated carbon of the present invention is used in water treatment by passing water at a high superficial velocity, the superficial velocity to be applied is preferably 2000 to 4000 h⁻¹, and more preferably 2000 to 3500 h⁻¹.

### [Production Method]

While the activated carbon of the present invention may be produced by any method that can produce an activated carbon satisfying the predetermined ranges of the pore volumes A and B and the specific surface area as described above, one preferred example of such methods is a method comprising the step of activating an activated carbon precursor comprising 0.1 to 1.0% by mass of yttrium at a temperature of 925 to 940°C in an atmosphere having a CO₂ concentration of 90% by volume or more. This production method, hereinafter referred to as "the method for producing the activated carbon of the present invention", will now be described in detail.

The method for producing the activated carbon of the present invention activates the activated carbon precursor comprising 0.1 to 1.0% by mass of yttrium at 925 to 940°C using an activation gas containing 90% by volume or more of CO₂, which reacts with the activated carbon precursor more slowly than steam, allowing an activated carbon satisfying the predetermined ranges of the pore volumes A and B and the specific surface area as described above to be produced.

In the method for producing the activated carbon of the present invention, examples of the main raw material of the activated carbon precursor include, but are not limited to, infusibilized or carbonized organic materials and infusible resins such as phenolic resins. Examples of the organic materials include polyacrylonitrile, pitch, polyvinyl alcohol, and cellulose. Of these main raw materials, pitch, particularly coal pitch, is preferred in terms of the theoretical carbonization yield during carbonization.

The yttrium contained in the activated carbon precursor may be in the form of yttrium alone, in the form of an yttrium compound, or in the form of a mixture thereof, preferably an yttrium compound.

Examples of the yttrium compound include inorganic yttrium compounds, such as yttrium oxide, yttrium hydroxide, yttrium halides, and yttrium sulfate; yttrium organic acid salts, such as yttrium acetate; and organic yttrium compounds. Among these yttrium compounds, organic yttrium compounds are preferred, in view of increasing the dispersibility of the yttrium compound in the activated carbon precursor, and facilitating satisfying the preferred ranges of the pore volumes A and B and the specific surface area described above in the resulting activated carbon. One preferred example of organic yttrium compounds is an yttrium complex containing a β-diketone compound as a ligand. Examples of the β-diketone compound include those having the structures represented by the following formulae (1) to (3):

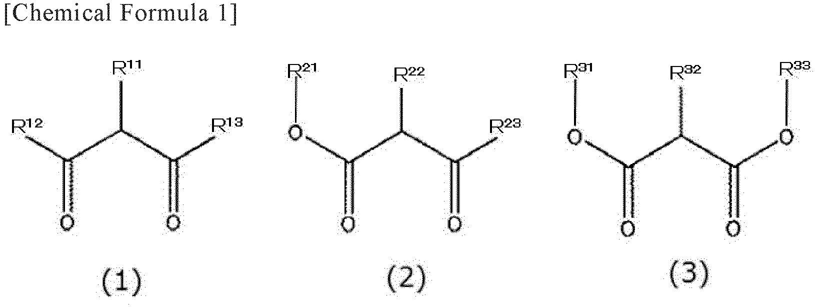

In formula (1), R¹² and R¹³ are the same or different and each represent a C₁₋₂₂ alkyl group or a C₁₋₂₂ alkenyl group, preferably a C₁₋₁₁ alkyl group or a C₁₋₁₁ alkenyl group, more preferably a C₁₋₈ alkyl group, and still more preferably a methyl group. In formula (1), R¹¹ represents a hydrogen atom, a C₁₋₂₂ alkyl group or a C₁₋₂₂ alkenyl group, preferably a hydrogen atom, a C₁₋₁₁ alkyl group or a C₁₋₁₁ alkenyl group, and more preferably a hydrogen atom.

In formula (2), R²¹ represents a hydrogen atom, a C₁₋₂₂ alkyl group or a C₁₋₂₂ alkenyl group, preferably a hydrogen atom, a C₁₋₁₁ alkyl group or a C₁₋₁₁ alkenyl group, and more preferably a hydrogen atom. In formula (2), R²² represents a hydrogen atom, a C₁₋₂₂ alkyl group or a C₁₋₂₂ alkenyl group, preferably a hydrogen atom, a C₁₋₁₁ alkyl group or a C₁₋₁₁ alkenyl group, and more preferably a hydrogen atom. In formula (2), R²³ represents a C₁₋₂₂ alkyl group or a C₁₋₂₂ alkenyl group, preferably a C₁₋₁₁ alkyl group or a C₁₋₁₁ alkenyl group, more preferably a C₁₋₈ alkyl group, and still more preferably a methyl group.

In formula (3), R³¹ and R³³ are the same or different and each represent a hydrogen atom, a C₁₋₂₂ alkyl group or a C₁₋₂₂ alkenyl group, preferably a hydrogen atom, a C₁₋₁₁ alkyl group or a C₁₋₁₁ alkenyl group, and more preferably a hydrogen atom. In formula (3), R³² represents a hydrogen atom, a C₁₋₂₂ alkyl group or a C₁₋₂₂ alkenyl group, preferably a hydrogen atom, a C₁₋₁₁ alkyl group or a C₁₋₁₁ alkenyl group, and more preferably a hydrogen atom.

Among yttrium complexes containing a β-diketone compound as a ligand, preferred is an yttrium complex containing a β-diketone compound represented by formula (1) as a ligand, and more preferred is tris(acetylacetonato)yttrium [an yttrium complex in which three molecules of acetylacetone (a compound of formula (1) wherein R¹¹ and R¹³ are methyl groups, and R¹² is a hydrogen atom) are coordinated].

In the method for producing the activated carbon of the present invention, the yttrium content in the activated carbon precursor may be any value in the range from 0.1 to 1.0% by mass, but is preferably 0.15 to 1.0% by mass, more preferably 0.15 to 0.5% by mass, and still more preferably 0.20 to 0.25% by mass. The yttrium content in the activated carbon precursor is the proportion of yttrium in terms of elemental yttrium as measured using an energy dispersive X-ray fluorescence spectrometer.

In the method of the present invention, the CO₂ concentration in the atmosphere for activation may be any value in the range of 90% by volume or more, but is preferably 95% by volume or more, and more preferably 99% by volume or more. As described above, the reaction proceeds slowly using CO₂ as the activation gas, and therefore, the pore size distribution can be more easily adjusted as the CO₂ concentration is increased, which facilitates obtaining the activated carbon of the present invention.

Examples of components other than CO₂ in the atmosphere for activation include N₂, O₂, H₂, H₂O, and CO.

In the method of the present invention, the atmospheric temperature for activation may be any value in the range from 925 to 940°C, but is preferably 928 to 938°C, and more preferably 930 to 935°C. An activated carbon satisfying the predetermined ranges of the pore volumes A and B and the specific surface area as described above can be obtained only when the activation temperature is set in the above-defined range while using an activated carbon precursor containing 0.1 to 1.0% by mass of yttrium in an atmosphere having a CO₂ concentration of 90% by volume or more.

The activation time may be adjusted to give the predetermined pore size distribution and specific surface area, according to the main raw material of the activated carbon precursor, the yttrium compound content, the CO₂ concentration in the activation gas, and the like. For example, when pitch having a softening point of 275 to 288°C is used as the main raw material of the activated carbon precursor, the yttrium compound content in the activated carbon precursor is 0.1 to 1.0 part by mass, and the CO₂ concentration is 100% by volume, the activation may be performed at an atmospheric temperature for activation of 925 to 940°C, for an activation time of 30 to 50 minutes.

The activated carbon obtained after the activation may be subjected to washing treatment using an acid such as sulfuric acid, as required. The washing treatment can reduce the yttrium content in the activated carbon, without adversely affecting the mechanical strength and filtration capacity for trihalomethanes.

### Examples

The present invention will be hereinafter described in detail with reference to examples and comparative examples; however, the present invention is not limited to the examples.

### 1. Test Methods

### (1) Yttrium Content (% by mass) in the Activated Carbon Precursor (Infusibilized Pitch Fiber)

The pitch fiber was pulverized, and the proportion of yttrium in terms of elemental yttrium as measured using an energy dispersive X-ray fluorescence spectrometer (NEX DE available from Rigaku Corporation) was determined as the yttrium content.

### (2) Iron Content (% by mass) in the Activated Carbon Precursor (Infusibilized Pitch Fiber)

The pitch fiber was subjected to ashing treatment, the ash was dissolved in an acid, and the proportion of iron in terms of elemental iron as measured using an ICP emission spectrometer (model number: 715-ES available from Varian Inc.) was determined as the iron content.

### (3) Yttrium Content (% by mass) in the Activated Carbon

The fibrous activated carbon was pulverized, and the proportion of yttrium in terms of elemental yttrium as measured using an energy dispersive X-ray fluorescence spectrometer (NEX DE available from Rigaku Corporation) was determined as the yttrium content.

### (4) Iron Content (% by mass) in the Activated Carbon

The fibrous activated carbon was subjected to ashing treatment, the ash was dissolved in an acid, and the proportion of iron in terms of elemental iron as measured using an ICP emission spectrometer (model number: 715-ES available from Varian Inc.) was determined as the iron content.

### (5) Pore Volumes (cc/g) and Specific Surface Area (m²/g)

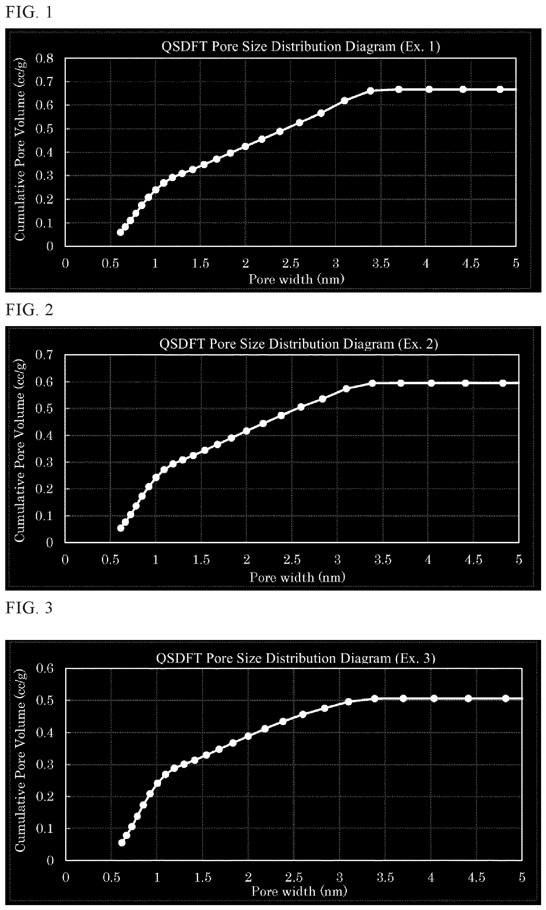

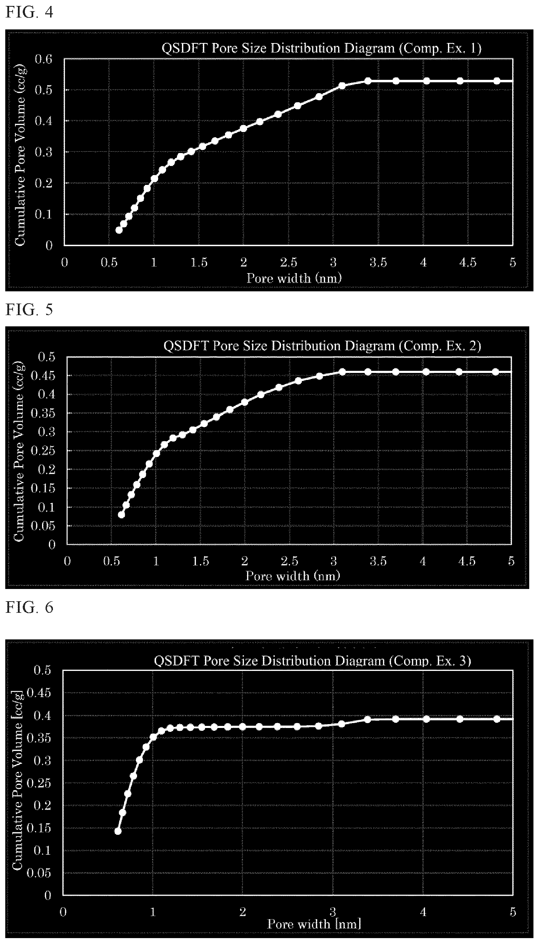

The physical property values of pores were measured based on a nitrogen desorption isotherm (relative pressure: 0.02 to 0.995) at 77 K, using "AUTOSORB-1-MP" available from Quantachrome. The specific surface area was calculated by the BET method, from the measurement point at a relative pressure of 0.1. The total pore volume and the pore volume of pores with each range of sizes shown in Table 1 were analyzed by calculating a pore size distribution by applying the calculation model, N₂ at 77 K on carbon [slit pore, QSDFT equilibrium model], to the measured nitrogen desorption isotherm. Specifically, the pore volume of pores with each range of sizes shown in Table 1 represents the reading from the graph showing the pore size distribution shown in each of Figs. 1 to 6, or the value calculated based on the reading. More specifically, the pore volume of pores with a size of 0.65 nm or less represents the reading of Cumulative Pore Volume (cc/g) at a Pore Width of 0.65 nm along the horizontal axis on the pore size distribution diagram. Similarly, the pore volume of pores with a size of 0.8 nm or less, the pore volume A of pores with a size of 1.0 nm or less, the pore volume of pores with a size of 1.5 nm or less, the pore volume of pores with a size of 2.0 nm or less, the pore volume of pores with a size of 2.5 nm or less, the pore volume of pores with a size of 3.0 nm or less, and the pore volume of pores with a size of 3.5 nm or less were determined. The pore volume B of pores with a size of 1.5 nm or more and 2.5 nm or less was calculated by subtracting the pore volume of pores with a size of 1.5 nm or less from the pore volume of pores with a size of 2.5 nm or less. A total pore volume as determined by the QSDFT method was used as the total pore volume. The pore volume of pores with a size of 2.0 nm or more was calculated by subtracting the pore volume of pores with a size of 2.0 nm or less from the total pore volume as determined by the QSDFT method. The pore volume of pores with a size of 2.5 nm or more was calculated by subtracting the pore volume of pores with a size of 2.5 nm or less from the total pore volume as determined by the QSDFT method. The pore volume of pores with a size of 3.5 nm or more was calculated by subtracting the pore volume of pores with a size of 3.5 nm or less from the total pore volume as determined by the QSDFT method. The pore volume of pores with a size of 1.0 nm or more and 1.5 nm or less was calculated by subtracting the pore volume A of pores with a size of 1.0 nm or less from the pore volume of pores with a size of 1.5 nm or less. The pore volume of pores with a size of 1.0 nm or more and 2.0 nm or less was calculated by subtracting the pore volume A of pores with a size of 1.0 nm or less from the pore volume of pores with a size of 2.0 nm or less. The pore volume of pores with a size of 0.65 nm or more and 0.8 nm or less was calculated by subtracting the pore volume of pores with a size of 0.65 nm or less from the pore volume of pores with a size of 0.8 nm or less. The pore volume of pores with a size of 0.65 nm or more and 1.0 nm or less was calculated by subtracting the pore volume of pores with a size of 0.65 nm or less from the pore volume A of pores with a size of 1.0 nm or less. The pore volume of pores with a size of 0.8 nm or more and 1.5 nm or less was calculated by subtracting the pore volume of pores with a size of 0.8 nm or less from the pore volume of pores with a size of 1.5 nm or less. The pore volume of pores with a size of 2.0 nm or more and 3.0 nm or less was calculated by subtracting the pore volume of pores with a size of 2.0 nm or less from the pore volume of pores with a size of 3.0 nm or less.

### (6) Fiber Diameter (µm) of the Fibrous Activated Carbon

An image of a specimen of a single fiber of the fibrous activated carbon as viewed from the side was observed with an optical microscope (ECLIPSE E600 available from Nikon Corporation) at 400,000x magnification, and the image was taken with a microscope camera system (Moticam Pro 252A available from Motic) (512 × 384) attached to the microscope. The image taken was imported into image analysis software (Image-Pro Plus) to measure the width of the specimen at a given position in the length direction. This was repeated for 50 fibers of the fibrous activated carbon, and the average value of the widths of the 50 fibers was determined as the average fiber diameter.

### (7) Filtration Capacity for Chloroform (L/g)

The fibrous activated carbon was dried in a dryer at 105 °C for 2 hours or more, and then 3.0 g of the activated carbon was taken as a sample, beaten in a mixer and then packed into a glass column (diameter: 25 mm) to prepare an activated carbon column (with an activated carbon packing height of 41 mm). Based on the method as specified in "6.4.4.1 Individual Methods" in JIS S 3201: 2019 "Testing methods for household water purifiers", test raw water having a chloroform concentration of 60 ± 12 ppb was prepared, controlled to a water temperature of 20 ± 1°C, and passed through the activated carbon column at a superficial velocity of 3000 h⁻¹. Chloroform concentrations in the test raw water and filtrate were measured by the headspace method, using a non-radiation source-type electron capture detector (GC7000EN available from J-SCIENCE LAB Co., Ltd.). The test raw water was continuously passed until the chloroform removal rate for the filtrate decreased below 80%, and the amount of passed water (L/g) when a chloroform removal rate of 80% was reached was determined as the filtration capacity for chloroform. When the amount of passed water when a chloroform removal rate of 80% was reached was 40 L/g or more, the activated carbon was evaluated as having an excellent filtration capacity for chloroform. The chloroform removal rate (%) was calculated according to the equation shown below. The amount of passed water when a chloroform removal rate of 80% was reached refers to the total amount of the filtrate flowed through the activated carbon column and collected until the chloroform removal rate decreased to 80%. Chloroform removal rate (%) = {(chloroform concentration in test raw water - chloroform concentration in filtered water) / (chloroform concentration in test raw water)} × 100

### (8) Tensile Strength (GPa) of the Fibrous Activated Carbon

Tensile strength was measured in accordance with "7.3.2 Tensile strength" in JIS K 1477: 2007 "Test methods for fibrous activated carbon", using a tensile testing machine available from Shimadzu Corporation (trade name: SIMADZU EZ-SX) as the measuring apparatus. Specifically, a specimen was prepared first by fixing both ends of a single fiber of the fibrous activated carbon to a test mount. The specimen was mounted on the tensile testing machine, the test mount for the specimen was cut, and the fibrous activated carbon was subjected to a tensile test. The tensile test was performed at a specimen length of 10.0 ± 0.2 mm and a tensile speed of 1 mm/min. The tensile strength was calculated as follows: The force (N) applied at breakage of the fibrous activated carbon was divided by the cross-sectional area (mm²) of the fiber calculated based on the above-described average fiber diameter, and converted to units of GPa (1 GPa = 1000 N/mm²). When the tensile strength of the fibrous activated carbon was 0.15 GPa or more, the activated carbon was evaluated as having a high mechanical strength.

### 2. Production of Fibrous Activated Carbons and Evaluation Results

### Example 1

A mixture obtained by mixing 100 parts by mass of granular coal pitch having a softening point of 280°C as an organic material with 1.0 part by mass of tris(acetylacetonato)yttrium (CAS NO: 15554-47-9) was fed into a melt extruder, where it was melted and mixed at a melting temperature of 325 °C and then spun to give a pitch fiber. The pitch fiber was subjected to infusibilization treatment by heating to 360 °C from ambient temperature in the air at a rate of 1 to 30 °C/min for 70 minutes to give an activated carbon precursor as an infusibilized pitch fiber. In the activated carbon precursor, the yttrium content was 0.228% by mass and the iron content was 0% by mass.

The activated carbon precursor was activated by heat-treating at an atmospheric temperature of 935 °C for 40 minutes, while continuously introducing a gas having a CO₂ concentration of 100% by volume into an activation furnace, to give a fibrous activated carbon.

Table 1 shows the measured results of metal contents, pore volumes, specific surface area, fiber diameter of the fibrous activated carbon, filtration capacity for chloroform, and tensile strength for the activated carbon obtained. The activated carbon had a pore volume A of pores with a size of 1.0 nm or less of 0.238 cc/g, a pore volume B of pores with a size of 1.5 nm or more and 2.5 nm or less of 0.169 cc/g, a specific surface area of 1151 m²/g, an yttrium content of 0.57% by mass, an iron content of 0% by mass, and an average fiber diameter of 14.0 µm. The activated carbon was then washed with sulfuric acid. The yttrium content in the activated carbon after washing was 0.038% by mass. The pore volumes, specific surface area, fiber diameter of the fibrous activated carbon, filtration capacity for chloroform, and tensile strength of the activated carbon after washing remained unchanged from before washing.

### Example 2

A mixture obtained by mixing 100 parts by mass of granular coal pitch having a softening point of 280 °C as an organic material with 1.0 part by mass of tris(acetylacetonato)yttrium (CAS NO: 15554-47-9) was fed into a melt extruder, where it was melted and mixed at a melting temperature of 325 °C and then spun to give a pitch fiber. The pitch fiber was subjected to infusibilization treatment by heating to 360 °C from ambient temperature in the air at a rate of 1 to 30 °C/min for 70 minutes to give an activated carbon precursor as an infusibilized pitch fiber. In the activated carbon precursor, the yttrium content was 0.228% by mass. The iron content was 0% by mass.

The activated carbon precursor was activated by heat-treating at an atmospheric temperature of 930 °C for 40 minutes, while continuously introducing a gas having a CO₂ concentration of 100% by volume into an activation furnace, to give a fibrous activated carbon.

Table 1 shows the measured results of metal contents, pore volumes, specific surface area, fiber diameter of the fibrous activated carbon, filtration capacity for chloroform, and tensile strength for the activated carbon obtained. The activated carbon had a pore volume A of pores with a size of 1.0 nm or less of 0.240 cc/g, a pore volume B of pores with a size of 1.5 nm or more and 2.5 nm or less of 0.153 cc/g, a specific surface area of 1097 m²/g, an yttrium content of 0.53% by mass, an iron content of 0% by mass, and an average fiber diameter of 14.0 µm. The activated carbon was then washed with sulfuric acid. The yttrium content in the activated carbon after washing was 0.038% by mass. The pore volumes, specific surface area, fiber diameter of the fibrous activated carbon, filtration capacity for chloroform, and tensile strength of the activated carbon after washing remained unchanged from before washing.

### Example 3

A mixture obtained by mixing 100 parts by mass of granular coal pitch having a softening point of 280°C as an organic material with 1.0 part by mass of tris(acetylacetonato)yttrium (CAS NO: 15554-47-9) was fed into a melt extruder, where it was melted and mixed at a melting temperature of 325 °C and then spun to give a pitch fiber. The pitch fiber was subjected to infusibilization treatment by heating to 360 °C from ambient temperature in the air at a rate of 1 to 30 °C/min for 70 minutes to give an activated carbon precursor as an infusibilized pitch fiber. In the activated carbon precursor, the yttrium content was 0.232% by mass. The iron content was 0% by mass.

The activated carbon precursor was activated by heat-treating at an atmospheric temperature of 930 °C for 40 minutes, while continuously introducing a gas having a CO₂ concentration of 100 % by volume into an activation furnace, to give a fibrous activated carbon.

Table 1 shows the measured results of metal contents, pore volumes, specific surface area, fiber diameter of the fibrous activated carbon, filtration capacity for chloroform, and tensile strength for the activated carbon obtained. The activated carbon had a pore volume A of pores with a size of 1.0 nm or less of 0.239 cc/g, a pore volume B of pores with a size of 1.5 nm or more and 2.5 nm or less of 0.122 cc/g, a specific surface area of 1005 m²/g, an yttrium content of 0.44% by mass, an iron content of 0% by mass, and an average fiber diameter of 14.6 µm. The activated carbon was then washed with sulfuric acid. The yttrium content in the activated carbon after washing was 0.038% by mass. The pore volumes, specific surface area, fiber diameter of the fibrous activated carbon, filtration capacity for chloroform, and tensile strength of the activated carbon after washing remained unchanged from before washing.

### Comparative Example 1

A mixture obtained by mixing 100 parts by mass of granular coal pitch having a softening point of 280 °C as an organic material with 1.3 parts by mass of tris(acetylacetonato)yttrium (CAS NO: 15554-47-9) was fed into a melt extruder, where it was melted and mixed at a melting temperature of 325 °C and then spun to give a pitch fiber. The pitch fiber was subjected to infusibilization treatment by heating to 370 °C from ambient temperature in the air at a rate of 1 to 30 °C/min for 60 minutes to give an activated carbon precursor as an infusibilized pitch fiber. In the activated carbon precursor, the yttrium content was 0.285% by mass. The iron content was 0% by mass.

The activated carbon precursor was activated by heat-treating at an atmospheric temperature of 896 °C for 32 minutes, while continuously introducing a gas having a H₂O concentration of 100 % by volume into an activation furnace, to give a fibrous activated carbon.

Table 1 shows the measured results of metal contents, pore volumes, specific surface area, fiber diameter of the fibrous activated carbon, filtration capacity for chloroform, and tensile strength for the activated carbon obtained. The activated carbon had a pore volume A of pores with a size of 1.0 nm or less of 0.212 cc/g, a pore volume B of pores with a size of 1.5 nm or more and 2.5 nm or less of 0.124 cc/g, a specific surface area of 993 m²/g, an yttrium content of 0.59 % by mass, an iron content of 0 % by mass, and an average fiber diameter of 17.4 µm. The activated carbon was then washed with sulfuric acid. The yttrium content in the activated carbon after washing was 0.038 % by mass. The pore volumes, specific surface area, fiber diameter of the fibrous activated carbon, filtration capacity for chloroform, and tensile strength of the activated carbon after washing remained unchanged from before washing.

### Comparative Example 2

A mixture obtained by mixing 100 parts by mass of granular coal pitch having a softening point of 280 °C as an organic material with 1.0 part by mass of tris(acetylacetonato)yttrium (CAS NO: 15554-47-9) was fed into a melt extruder, where it was melted and mixed at a melting temperature of 325 °C and then spun to give a pitch fiber. The pitch fiber was subjected to infusibilization treatment by heating to 360 °C from ambient temperature in the air at a rate of 1 to 30 °C/min for 70 minutes to give an activated carbon precursor as an infusibilized pitch fiber. In the activated carbon precursor, the yttrium content was 0.234 % by mass. The iron content was 0 % by mass.

The activated carbon precursor was activated by heat-treating at an atmospheric temperature of 915 °C for 40 minutes, while continuously introducing a gas having a CO₂ concentration of 100% by volume into an activation furnace, to give a fibrous activated carbon.

Table 1 shows the measured results of metal contents, pore volumes, specific surface area, fiber diameter of the fibrous activated carbon, filtration capacity for chloroform, and tensile strength for the activated carbon obtained. The activated carbon had a pore volume A of pores with a size of 1.0 nm or less of 0.239 cc/g, a pore volume B of pores with a size of 1.5 nm or more and 2.5 nm or less of 0.112 cc/g, a specific surface area of 960 m²/g, an yttrium content of 0.45 % by mass, an iron content of 0 % by mass, and an average fiber diameter of 14.0 µm. The activated carbon was then washed with sulfuric acid. The yttrium content in the activated carbon after washing was 0.038 % by mass. The pore volumes, specific surface area, fiber diameter of the fibrous activated carbon, filtration capacity for chloroform, and tensile strength of the activated carbon after washing remained unchanged from before washing.

### Comparative Example 3

A mixture obtained by mixing 100 parts by mass of granular coal pitch having a softening point of 280 °C as an organic material with 0.9 part by mass of tris(2,4-pentanedionato)iron(III) (metal species: Fe) was fed into a melt extruder, where it was melted and mixed at a melting temperature of 320 °C and then spun to give a pitch fiber. The pitch fiber was subjected to infusibilization treatment by heating to 354 °C from ambient temperature in the air at a rate of 1 to 30 °C/min for 54 minutes to give an activated carbon precursor as an infusibilized pitch fiber. In the activated carbon precursor, the iron (Fe) content was 0.110 % by mass.

The activated carbon precursor was activated by heat-treating at an atmospheric temperature of 950 °C for 25 minutes, while continuously introducing a gas having a CO₂ concentration of 100% by volume into an activation furnace, to give a fibrous activated carbon.

Table 1 shows the measured results of metal contents, pore volumes, specific surface area, fiber diameter of the fibrous activated carbon, filtration capacity for chloroform, and tensile strength for the activated carbon obtained. The activated carbon had a pore volume A of pores with a size of 1.0 nm or less of 0.350 cc/g, a pore volume B of pores with a size of 1.5 nm or more and 2.5 nm or less of 0.002 cc/g, a specific surface area of 988 m²/g, an yttrium content of 0 % by mass, an iron content of 0.18 % by mass, and an average fiber diameter of 13.9 µm. The activated carbon was then washed with sulfuric acid. The iron content in the activated carbon after washing was 0.038 % by mass. The pore volumes, specific surface area, fiber diameter of the fibrous activated carbon, filtration capacity for chloroform, and tensile strength of the activated carbon after washing remained unchanged from before washing.

### 3. Summary of Evaluation Results

Table 1 shows physical properties and the like of each fibrous activated carbon obtained. Figs. 1 to 6 show the pore size distribution diagrams of the activated carbons as calculated by the QSDFT method.

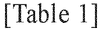

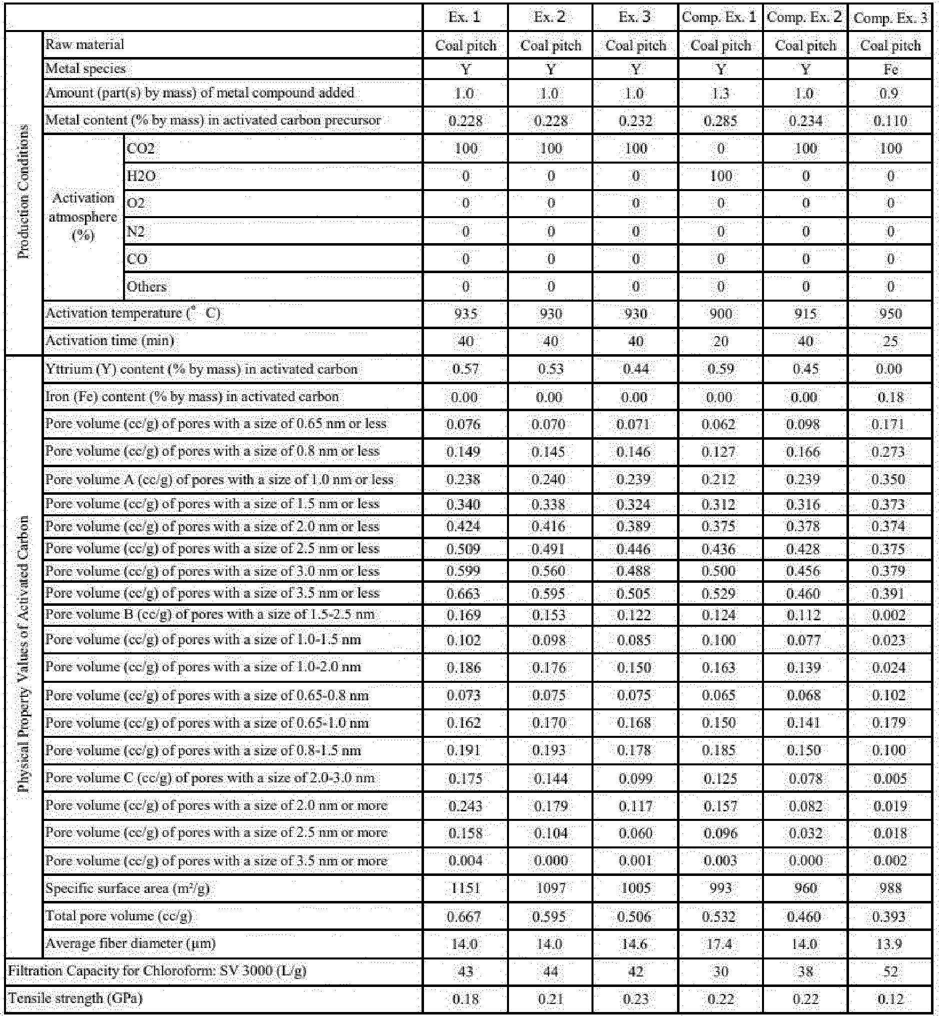

The activated carbons of Examples 1 to 3 had a tensile strength of 0.15 GPa or more, i.e., a high mechanical strength, and had a filtration capacity for chloroform (amount of passed water when a chloroform removal rate of 80% was reached) of 40 L/g or more at a superficial velocity of 3000 h⁻¹, i.e., an excellent filtration capacity for chloroform at a high superficial velocity. It was observed from the physical property values, tensile strength, and filtration capacity for chloroform satisfied by the activated carbons of Examples 1 to 3 that when an activated carbon satisfies the following: (1) the pore volume A of pores with a size of 1.0 nm or less, of pore volumes calculated by the QSDFT method, is 0.23 cc/g or more and 0.25 cc/g or less; (2) the pore volume B of pores with a size of 1.5 nm or more and 2.5 nm or less, of pore volumes calculated by the QSDFT method, is more than 0.12 cc/g and 0.19 cc/g or less; and (3) the activated carbon has a specific surface area of 1000 m²/g or more and 1200 m²/g or less, the activated carbon can achieve a high mechanical strength and an excellent filtration capacity for chloroform simultaneously.

In contrast, the activated carbon of Comparative Example 1 had a lower filtration capacity for chloroform at a high superficial velocity because it had a pore volume A of pores with a size of 1.0 nm or less of less than 0.23 cc/g and had a specific surface area of less than 1000 m²/g.

The activated carbon of Comparative Example 2 had a lower filtration capacity for chloroform at a high superficial velocity because it had a pore volume B of pores with a size of 1.5 nm or more and 2.5 nm or less of less than 0.12 cc/g and had a specific surface area of less than 1000 m²/g.

The activated carbon of Comparative Example 3 had a lower mechanical strength because it had a pore volume A of pores with a size of 1.0 nm or less of more than 0.25 cc/g.

## Claims

1. An activate carbon in which a pore volume A of pores with a size of 1.0 nm or less, of pore volumes calculated by the QSDFT method from a nitrogen desorption isotherm, is 0.230 cc/g or more and 0.250 cc/g or less,
a pore volume B of pores with a size of 1.5 nm or more and 2.5 nm or less, of pore volumes calculated by the QSDFT method from the nitrogen desorption isotherm, is more than 0.120 cc/g and 0.190 cc/g or less, and
the activated carbon has a specific surface area of 1000 m²/g or more and 1200 m²/g or less.

2. The activated carbon according to claim 1, wherein the activated carbon is fibrous activated carbon.

3. The activated carbon according to claim 1, wherein the activated carbon has a filtration capacity for chloroform of 40 L/g or more in water treatment by passing water at a superficial velocity of 3000 h⁻¹ as set forth below:
<Method of Measuring the Chloroform Filtration Capacity in Water Treatment by Passing Water at a Superficial Velocity of 3000 h⁻¹>
3.0 g of the activated carbon after dried is beaten and then packed into a glass column (diameter: 25 mm) to prepare an activated carbon column (with an activated carbon packing height of 41 mm). Test raw water with a chloroform concentration of 60 ± 12 ppb is prepared, controlled to a water temperature of 20 ± 1°C, and passed through the activated carbon column at a superficial velocity of 3000 h⁻¹. Chloroform concentrations in the test raw water and filtrate are measured by the headspace method, using a non-radiation source-type electron capture detector. An amount of passed water (L/g) when a chloroform removal rate of 80% is reached is determined as the filtration capacity for chloroform.

4. The activated carbon according to claim 2, wherein the activated carbon has a tensile strength of 0.15 GPa or more as measured in accordance with "7.3.2 Tensile strength" in JIS K 1477: 2007 "Test methods for fibrous activated carbon".

5. A method of producing the activated carbon according to any one of claims 1 to 4, comprising the step of activating an activated carbon precursor comprising 0.1 to 1.0% by mass of yttrium at a temperature of 925 to 940°C in an atmosphere having a CO₂ concentration of 90% by volume or more.

6. A water purification filter comprising the activated carbon according to any one of claims 1 to 4.

7. A method of filtering water, wherein the method is performed using the activated carbon according to any one of claims 1 to 4.
